(19) Europäisches Patentamt
European Patent Office
Office européen des brevets

(11) **EP 3 517 253 B1**

(12) **EUROPÄISCHE PATENTSCHRIFT**

(45) Veröffentlichungstag und Bekanntmachung des Hinweises auf die Patenterteilung:
**06.03.2024 Patentblatt 2024/10**

(21) Anmeldenummer: **19154071.5**

(22) Anmeldetag: **29.01.2019**

(51) Internationale Patentklassifikation (IPC):
**B25F 5/00** (2006.01)     **H02J 7/00** (2006.01)

(52) Gemeinsame Patentklassifikation (CPC):
**B25F 5/00; H02J 7/00047; H02J 7/0013; H02J 7/0045**

(54) **MULTISLOT-SCHNITTSTELLE, ELEKTROGERÄT UND AKKULADEGERÄT**

MULTISLOT INTERFACE, ELECTRIC DEVICE AND BATTERY CHARGER

INTERFACE MULTIPLE, APPAREIL ÉLECTRIQUE ET APPAREIL DE CHARGE DE BATTERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.01.2018 DE 102018102060**

(43) Veröffentlichungstag der Anmeldung:
**31.07.2019 Patentblatt 2019/31**

(73) Patentinhaber: **Metabowerke GmbH**
**72622 Nürtingen (DE)**

(72) Erfinder:
• **Matheis, Frank**
**73262 Reichenbach (DE)**
• **Wiesner, Bernd**
**73277 Owen (DE)**
• **Witkowski, Julian**
**73779 Deizisau (DE)**

(74) Vertreter: **Markfort, Iris-Anne Lucie**
**Lorenz & Kollegen**
**Patentanwälte Partnerschaftsgesellschaft mbB**
**Alte Ulmer Straße 2**
**89522 Heidenheim (DE)**

(56) Entgegenhaltungen:
WO-A1-2010/034079     WO-A1-2014/142112
US-A1- 2008 143 294     US-A1- 2013 062 955

## Beschreibung

Die Erfindung betrifft eine Multislot-Schnittstelle gemäß dem Oberbegriff des Anspruchs 1.

Die Erfindung betrifft ein Elektrogerät gemäß dem Oberbegriff des Anspruchs 2 und ein Akkuladegerät gemäß dem Oberbegriff des Anspruchs 3, die beide jeweils wenigstens eine Batterieschnittstelle zum elektrischen und mechanischen Koppeln von wenigstens einem Batteriepack aufweisen.

Üblicherweise werden batteriebetriebene Elektrogeräte, insbesondere Elektrowerkzeuggeräte, mit passenden Akkupack bzw. Akkupacks verkauft, die eine Spannungsversorgung der Antriebseinheit des Elektrogeräts ermöglichen. Weiterhin wird auf dem Gebiet der Akkupacks stetig entwickelt, so dass immer wieder Akkupacks mit höheren Leistungen auf den Markt kommen. Daher finden sich heutzutage beispielsweise bei Werkzeugmaschinen, die batteriebetrieben sind, häufig Akkupacks mit einer höheren Spannung, beispielsweise 36 Volt als Zubehör, als noch vor zehn Jahren. Während bei älteren Werkzeugmaschinen mehrere Akkupacks zur Spannungsversorgung vorgesehen sein können, beispielsweise zwei Akkupacks mit einer Spannung von 18 Volt, können heutzutage auch Werkzeugmaschinen mit einem einzigen Akkupack mit einer höheren Spannung, beispielsweise 36 Volt, betrieben werden.

Aus dem Stand der Technik ist es bekannt, ein batteriebetriebenes Elektrogerät, insbesondere eine Werkzeugmaschine, mit Hilfe eines Adapters in der Weise umzurüsten, dass die Maschine, die üblicherweise mit zwei Akkupacks einer Spannung von 18 Volt betrieben wird, über den Adapter auch mit einem einzigen Akkupack mit 36 Volt betrieben werden kann. So beschreibt beispielsweise die Druckschrift EP 2 595 273 A2 einen entsprechenden Adapter.

Auch die Druckschrift DE 20 2011 110 568 U1 beschreibt eine batteriebetriebene Werkzeugmaschine mit einer Anzahl von Akkuaufnahmen, bei der mittels eines entsprechenden Adapters die Werkzeugmaschine nun auch mit einem einzigen am Adapter angebrachten Akkupack betrieben werden kann.

Umgekehrt beschreibt die US 2013/0062955 A1 eine Lösung, bei der ein Adapter zur Umrüstung einer Maschine mit einer einzigen Schnittstelle zur Aufnahme eines 36 Volt Akkupacks auf die Aufnahme zweier 18 Volt Akkupacks zum Einsatz kommt. Bei einer spezifischen Ausführungsform kann der Adapter auch integral mit dem Gehäuse der Werkzeugmaschine ausgebildet sein. Dann entfällt jedoch die Möglichkeit der fallweisen Umrüstung von der Lösung mit zwei 18 Volt Akkupacks auf ein 36 Volt Akkupack.

Grundsätzlich ist es für Anwender sehr vorteilhaft, dass sie bestehende Elektrowerkzeugmaschinen nicht nur mit den mitgelieferten Akkupacks verwenden können, bzw. entsprechende Ersatzakkupacks nachkaufen müssen, sondern, dass sie auch durch eine entsprechende Nachrüstung mit einem Adapter alternative Akkupacks verwenden können. Durch die Weiterentwicklungen der Batterietechnik ist es in den letzten Jahren möglich geworden, Batteriepacks mit höheren Leistungen zu bauen. Für den Anwender ist es von Vorteil, wenn er nicht eine Vielzahl unterschiedlicher Batteriepacks für unterschiedliche Werkzeugmaschinen unterschiedlichen Alters bei sich führen muss, sondern insbesondere auch ältere Werkzeugmaschinen zusammen mit neueren Akkupacks verwenden kann.

Dennoch ist hierfür bei den aus dem Stand der Technik bekannten Lösungen, wie vorstehend beschrieben, immer die zusätzliche Mitführung und Verwendung eines Adapters notwendig. Ist dieser einmal vergessen oder beschädigt, so entfällt der vorstehend genannte Vorteil, und gegebenenfalls kann der Anwender, der möglicherweise nur Batteriepacks mit einer höheren Spannung im Gepäck hat, manche seiner Werkzeugmaschinen nicht verwenden.

Aus der Druckschrift DE 10 2016 118 805 A1 ist es weiterhin auch bekannt, um eine möglichst große Stückzahl in der Serienproduktion von Werkzeugmaschinen zu erreichen und zugleich eine gute Anpassung an unterschiedliche Marktbedürfnisse bereitzustellen, die Akkuschnittstelle bereits in der Produktion mit einer entsprechenden fest verdrahteten Adapterplatte zu versehen. Diese Lösung ist zwar für die Produktion von Vorteil, bringt aber für den Anwender die bekannten Nachteile, wenn er Werkzeugmaschinen mit unterschiedlich gearteten Schnittstellen verwenden möchte und damit unterschiedliche Akkupacks, die zum Betrieb der Werkzeugmaschinen benötigt werden, zu deren Betrieb bereit halten muss.

Weiterhin ist es aus dem Stand der Technik ebenfalls bekannt, Ladegeräte für wiederaufladbare Batteriezellen bereitzustellen, die geeignet sind, eine oder mehrere Zellen unterschiedlichen Formats aufzunehmen und zu laden, wie beispielsweise in der DE 31 10 629 A1 oder US 5,686,811 beschrieben. Die US 2008/0143294 A1 beschreibt schließlich ein Universal-Ladegerät für wiederaufladbare Batterien, dessen Aufnahmeöffnung an das Format der Batterie anpassbar ist, während in der WO 2010/034079 A1 ein Aufladegerät beschrieben ist, dessen elektrische Schnittstelle zur elektrischen Kontaktierung einer zu ladenden Batterie mehrere elektrische Kontakte für unterschiedlich ausgestaltete elektrische Gegenkontakte unterschiedlicher Batterietypen aufweist.

Weiterhin beschreibt die WO 2014/142112 A1 eine Handwerkzeugmaschine, bei der ein großes 36 Volt Akkupack oder zwei kleine 18 Volt Akkupacks fallweise über die gleiche Schnittstelle gekoppelt werden können. Die WO 2014/142112 A1 offenbart die Präambel des Anspruches 1.

Schließlich offenbart die US 2008/143294 A1 ein universelles Batterieladegerät mit einer verstellbaren Tasche zur Aufnahme von Batterien mit unterschiedlichen Abmessungen. Jede Batterie kann ungeachtet ihrer unterschiedlichen Abmessungen fest in der einstellbaren Tasche gehalten werden und eine elektrische Ladung von einem einzelnen Satz elektrischer Kontakte empfangen, die in der einstellbaren Tasche freigelegt sind. Die einstellbare Tasche ist einstellbar, da eine Batterieführung des Ladegeräts ein erstes und ein zweites Ende aufweist, die abwechselnd durch die Ebene des Gehäuses vorstehen, wodurch unterschiedliche dynamische Stützwände für unterschiedliche Batterien bereitgestellt werden. Die einstellbare Tasche kann verschiedene Batterien aufnehmen, indem verschiedene Aufnahmebereiche der Tasche verwendet werden. Ein Aufnahmebereich kann eine Seite einer ersten Batterie mit einer ersten dynamischen Wand stützen und andere Seiten der ersten Batterie mit stationären Wänden stützen. Ebenso kann ein anderer Aufnahmebereich eine Seite einer zweiten Batterie mit einer zweiten dynamischen Wand stützen und andere Seiten der zweiten Batterie mit stationären Wänden stützen.

Eine Aufgabe der vorliegenden Erfindung besteht darin, die aus dem Stand der Technik bekannten Nachteile zu verringern, um eine für einen Anwender vereinfachte Handhabung bereit zu stellen. Hierzu schlägt die Erfindung eine Multislot-Schnittstelle mit den Merkmalen des Anspruchs 1, ein batteriebetriebenes Elektrogerät mit den Merkmalen des Anspruchs 2 bzw. ein Akkuladegerät mit den Merkmalen des Anspruchs 3 vor. Beiden gemein ist, dass diese wenigstens eine Multislot-Batterieschnittstelle zum elektrischen und mechanischen Koppeln von wenigstens einem Batteriepack aufweisen.

Demgemäß umfasst das Elektrogerät neben einer elektrisch angetriebenen Antriebseinheit wenigstens eine Multislot-Batterieschnittstelle nach Anspruch 1.

Das anspruchsgemäße Elektrogerät ist nicht auf Elektrowerkzeugmaschinen beschränkt, sondern umfasst jede Art eines batteriebetriebenen Elektrogeräts, beispielsweise neben Elektrowerkzeugmaschinen auch Staubsauger, eine Lichtquelle, eine Lüftereinrichtung oder dergleichen.

Erfindungswesentlich ist, dass die Multislot-Schnittstelle derart ausgebildet ist, dass entweder mehrere Batteriepacks mit einer niedrigeren Spannung oder ein Batteriepack mit einer höheren Spannung wahlweise an der Schnittstelle angebracht werden können und elektrisch mit der Antriebseinheit derart gekoppelt werden, dass diese mit Hilfe des bzw. der gekoppelten Batteriepacks entsprechend mit Spannung versorgt werden kann.

Auf diese Weise kann auf einen Adapter, wie er aus dem Stand der Technik bekannt ist, verzichtet werden, und der Anwender kann entscheiden, mit welchen Batteriepacks er das Elektrogerät betreiben möchte.

Batteriepacks umfassen sowohl wiederaufladbare Batterien als auch Einweg-Batterien, die nicht wiederaufladbar sind. Im Zusammenhang mit dem Ladegerät des zweiten Erfindungsaspekts kommen sinnvollerweise wiederaufladbare Batteriepacks zum Einsatz.

Ein erfindungsgemäßes Akkuladegerät umfasst entsprechend einen Netzanschluss sowie wenigstens eine Multislot-Batterieschnittstelle nach Anspruch 1.

Das erfindungsgemäße Akkuladegerät und das erfindungsgemäße Elektrogerät eint, dass zur Aufnahme von zu ladenden bzw. zu entladenden Batteriepacks wenigstens eine Multislot-Schnittstelle vorgesehen ist, die wahlweise entweder ein Batteriepack mit einer höheren Spannung oder alternativ mehrere Batteriepacks mit einer niedrigeren Spannung aufzunehmen und mechanisch sowie elektrisch zu koppeln vermag. Die Multislot-Schnittstelle bei beiden Aspekten weist weiterhin wenigstens drei Batterieaufnahmen zur mechanischen Kopplung der Batteriepacks auf, die derart angeordnet sind, dass ein gekoppelter Batteriepack einer ersten oder zweiten Spannung das gleichzeitige mechanische Koppeln eines Batteriepacks einer jeweils anderen Spannung blockiert, wobei zwischen zwei benachbarten Batterieaufnahmen ein Blockierelement vorgesehen ist, das relativ zu den Batterieaufnahmen verschiebbar oder verdrehbar gelagert ist, und je nach Position bzw. Ausrichtung seitlich in zumindest eine der benachbarten Batterieaufnahmen zu ragen vermag.

Erfindungsgemäß ist die Schnittstelle derart ausgebildet, dass ein gekoppelter Batteriepack einer ersten oder zweiten Spannung das gleichzeitige Koppeln eines Batteriepacks einer jeweils anderen zweiten oder ersten Spannung blockiert. Auf diese Weise soll sichergestellt werden, dass eine Mischbelegung, die zu unerwünschten Spannungszuständen in dem Elektrogerät bzw. im Akkuladegerät führen kann, sicher vermieden wird. Diese Maßnahme dient insbesondere dem Schutz des Elektrogeräts bzw. Akkuladegeräts.

Hierzu weist die Schnittstelle wenigstens drei Batterieaufnahmen zur mechanischen Kopplung der Batteriepacks auf, wobei diese derart angeordnet sind, dass ein gekoppelter Batteriepack einer ersten oder zweiten Spannung das gleichzeitige mechanische Koppeln eines Batteriepacks einer jeweils anderen Spannung blockiert.

Bei dieser Maßnahme wird also über die strukturelle Ausgestaltung der Schnittstelle sichergestellt, dass eine Mischbelegung der Schnittstelle mit Batteriepacks unterschiedlicher Spannung sicher verhindert wird.

Zu diesem Zweck ist erfindungsgemäß zwischen zwei benachbarten Batterieaufnahmen ein Blockierelement vorgesehen, das relativ zu den Batterieaufnahmen verschiebbar oder verdrehbar gelagert ist und je nach Position bzw. Ausrichtung seitlich in zumindest einer der benachbarten Batterieaufnahmen zu ragen vermag. So wird das Blockierelement von einem mit einer der benachbarten Batterieaufnahmen mechanisch gekoppelten Batteriepacks in Folge seiner Kopplung derartig verdrängt, d. h. verdreht oder verschoben, dass es in die jeweilige benachbarte Batterieaufnahme ragt und so eine Belegung dieser benachbarten Batterieaufnahme mit einem weiteren Batteriepack verhindert.

Das Blockierelement kann dabei unabhängig von der Bereitstellung einer Führungsschiene zwischen den beiden Batterieaufnahmen vorgesehen sein, wobei auch der Bereich als zwischen zwei benachbarten Batterieaufnahmen liegend definiert wird, der von den Batteriepacks als Bauraum eingenommen wird, selbst wenn dieser nicht als physische Ausnehmung an dem Gehäuse des Elektrogeräts oder Ladegeräts vorgesehen ist. So ist es denkbar, beispielsweise zwei seitlich geöffnete Batterieaufnahmen nebeneinander vorzusehen, in die jeweils ein Batteriepack entlang einer Längsachse eingeschoben werden kann. Bei einer denkbaren Ausgestaltung ragt jedoch ein Teil der Batteriepacks auch im eingeschobenen Zustand noch über die seitlich geöffnete Aufnahme hinaus. In diesem Bereich kann ebenfalls zwischen den von zwei benachbarten Batteriepacks eingenommenen Bauraum ein entsprechendes Blockierelement vorgesehen sein.

Zudem können die Aufnahmen derart angeordnet sein, dass ein gekoppelter Batteriepack einer ersten Spannung die Aufnahmen zur Aufnahme zweier Batteriepacks einer zweiten, niedrigeren Spannung, teilweise überlappt oder in diese hineinragt und so ein vollständiges Auf- oder Einschieben, Auf- oder Einsetzen oder wie auch immer geartetes Aufnehmen in die Batterieaufnahmen blockiert. Durch dieses Überlappen oder hineinragen wird umgekehrt auch sichergestellt, dass bereits ein aufgenommener Batteriepack einer zweiten Spannung das gleichzeitige mechanische Koppeln eines Batteriepacks einer ersten Spannung sicher blockiert.

Weiterhin kann alternativ oder zusätzlich vorgesehen sein, dass die Batterieaufnahmen nebeneinander angeordnet sind und jeweils durch zwei im Wesentlichen parallel angeordnete Führungsschienen seitlich begrenzt sind, wobei insbesondere nebeneinander liegende Batterieaufnahmen optional gemeinsam eine Führungsschiene als seitliche Begrenzung nutzen können.

Bei dieser spezifischen Ausgestaltung kann sich bereits dadurch, dass optional zwei nebeneinander liegende Batterieaufnahmen gemeinsam eine Führungsschiene als seitliche Begrenzung nutzen, eine Blockierung daraus ergeben, dass ein aufgenommenes Batteriepack die Aufnahme eines Batteriepack in der benachbarten Batterieaufnahme blockiert, indem es bereits ein wenig in den zugehörigen Aufnahmebereich hineinragt und/oder die Führungsschiene in der Weise belegt, dass diese von dem anderen benachbarten Batteriepack nicht mehr nutzbar wäre.

Gemäß einer denkbaren Weiterbildung kann die eine Führungsschiene, die als seitliche Begrenzung gemeinsam von zwei benachbarten Batterieaufnahmen genutzt wird, eine seitliche Eingriffsnut aufweisen, in die wahlweise ein Eingriffselement eines an die Eingriffsnut anliegenden Batteriepacks mit einer ersten oder zweiten Spannung seitlich einzugreifen vermag, oder die von einem Eingriffselement eines benachbarten Batteriepacks mit einer jeweils anderen zweiten oder ersten Spannung übergriffen zu werden vermag. Ist also ein Batteriepack in einer der beiden Batterieaufnahmen aufgenommen und mechanisch gekoppelt, so belegt es mit Hilfe seines Eingriffselements die gemeinsam von zwei benachbarten Batterieaufnahmen genutzte Führungsschiene in der Weise, dass diese nicht mehr zur Nutzung eines Batteriepacks in der benachbarten Batterieaufnahme zur Verfügung steht.

Wie bereits vorstehend angedeutet, kann auch vorgesehen sein, dass die Batterieaufnahme für ein erstes Batteriepack und die Batterieaufnahmen für zweite Batteriepacks sich zumindest abschnittsweise überlappen.

Neben einer Blockierung, bei der die mechanische Kopplung eines Batteriepacks einer jeweils anderen Spannung durch ein bereits gekoppeltes Batteriepack blockiert wird, kann zusätzlich auch vorgesehen sein, dass ein Batteriepack einer ersten oder zweiten Spannung im gekoppelten Zustand die elektrische Kopplung eines Batteriepacks der jeweils anderen zweiten oder ersten Spannung blockiert. Auch durch eine solche Blockierung der elektrischen Kopplung wird sichergestellt, dass wahlweise ein erstes Batteriepack mit einer höheren Spannung oder wenigstens zwei zweite Batteriepacks mit einer niedrigeren Spannung als das erste Batteriepack entweder die Antriebseinheit eines batteriebetriebenen Elektrogeräts mit elektrischer Spannung versorgen oder von einem Akkuladegerät geladen werden können.

Bei einer spezifischen Ausgestaltung kann vorgesehen sein, dass der erste Batteriepack eine erste Spannung $V_1$, beispielsweise in Höhe von 36 Volt aufweist, und dass die zweiten Batteriepacks eine zweite Spannung $V_2$ aufweisen, die dem Quotienten der ersten Spannung und der Anzahl $n_2$ der zweiten Batteriepacks entspricht, beispielsweise in Höhe von 18 Volt im Falle von zwei zweiten Batteriepacks.

$$V_2 = V_1/n_2$$

So ist es beispielsweise denkbar, dass ein Elektrogerät, das üblicherweise mit einem Batteriepack mit 36 Volt-Spannung betrieben wird, mit alternativ zwei 18 Volt Batteriepacks oder drei 12 Volt Batteriepacks oder vier 9 Volt Batteriepacks etc. betrieben wird. Dies wird letztlich nur durch die spezifische Ausgestaltung der wenigstens einen Multislot-Schnittstelle vorgegeben, die mit entsprechenden Batterieaufnahmen versehen sein muss.

Es kann weiterhin vorgesehen sein, dass die Werkzeugmaschine mehrere Multislot-Schnittstellen aufweist, die in Reihe miteinander oder parallel geschaltet sind.

Bei dieser spezifischen Ausgestaltung können insbesondere die Multislot Schnittstellen parallel geschaltet sein, wobei zwischen den Stromkreisen der Multislot Schnittstellen wenigstens eine Diode vorgesehen sein kann. Bei einer solchen Diode zwischen zwei Multislot-Schnittstellen, die parallel geschaltet sind, können ideale Dioden ebenso wie auch übliche Dioden zum Einsatz kommen.

Die Erfindung betrifft schließlich auch eine entsprechende Multislot-Schnittstelle bzw. Schnittstelle für ein batteriebetriebenes Elektrogerät oder ein Akkuladegerät zum elektrischen und mechanischen Koppeln von wenigstens einem Batteriepack.

Der Vorteil der vorliegenden Erfindung besteht darin, dass durch das Vorsehen von wenigstens einer Multislot-Schnittstelle oder mehrerer Multislot-Schnittstellen an dem batteriebetriebenen Elektrogerät, dieses je nach Wunsch des Anwenders mit einem Batteriepack oder mehreren Batteriepacks genutzt werden kann, ohne dass hierfür ein zusätzlicher Adapter von Nöten ist. Im Hinblick auf das Akkuladegerät besteht der Vorteil der wenigstens einen Multislot-Schnittstelle darin, dass ein einziges Akkuladegerät für das Laden unterschiedlicher Batteriepacks eingesetzt werden kann, ohne, dass eine komplizierte Regelung des Ladestroms in Abhängigkeit von einer Erkennung der gekoppelten Batteriepacks nötig ist.

Ergänzend sei darauf hingewiesen, dass Begriffe, wie "umfassend" "aufweisen" oder "mit" keine anderen Merkmale oder Schritte ausschließen. Ferner schließen Begriffe "ein" oder "das", die auf einer Einzahl von Schritten oder Merkmalen hinweisen, keine Mehrzahl von Merkmalen oder Schritten aus und umgekehrt.

Weitere Merkmale und Vorteile der Erfindung ergeben sich aus der nachfolgenden Beschreibung eines Ausführungsbeispiels der Erfindung sowie aus den Unteransprüchen.

Die Erfindung ist nachfolgend unter Bezugnahme auf die beigefügten Figuren näher beschrieben. Die Figuren zeigen mehrere Merkmale der Erfindung in Kombination miteinander.

Es zeigen schematisch:

Figuren 1a und 1b      eine Multislot-Schnittstelle eines Elektrogeräts oder Akkuladegeräts in einer Draufsicht mit unterschiedlicher Batteriepack-Belegung;

Figuren 2a und 2b      eine Ausgestaltung einer Multislot-Schnittstelle eines erfindungsgemäßen Elektrogeräts oder Akkuladegeräts in einer Draufsicht mit unterschiedlicher BatteriepackBelegung;

Figur 3 und 4      unterschiedliche Anordnungsprinzipien der Batterieaufnahmen einer Multislot-Schnittstelle unter Anordnung zweier Multislot-Schnittstellen an einem Elektrogerät oder Akkuladegerät.

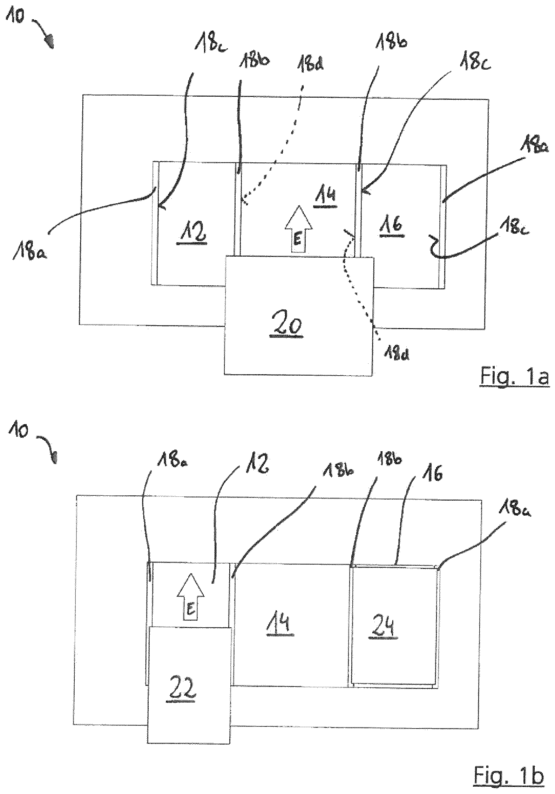

Die Figuren 1a bis 4 zeigen durchwegs in stark schematisierter Darstellung unterschiedliche denkbare Ausgestaltungen einer oder mehrerer Multislot-Schnittstellen, die bei einem Elektrogerät (nicht dargestellt) oder Akkuladegerät (nicht dargestellt) zum Einsatz kommen können.

In der ersten Ausführungsform, die nicht erfindungsgemäß ist, ist eine Multislot-Schnittstelle 10 mit drei parallel zueinander und nebeneinander angeordneten Batterieaufnahmen 12, 14 und 16 gezeigt. In der gezeigten Darstellung sind die Batterieaufnahmen 12 und 16 bezüglich ihrer Außenabmessungen gleich, während die dazwischen angeordnete Batterieaufnahme 14 etwas breiter ist. Eine solche Ausgestaltung ist denkbar, jedoch je nach Ausgestaltung der aufzunehmenden Batteriepacks nicht notwendig. Weiterhin kann zusätzlich oder alternativ auch vorgesehen sein, die Batterieaufnahme 14 beispielsweise (in Einschubrichtung E) länger zu gestalten.

In der dargestellten Ausführungsform können wahlweise in der Batterieaufnahme 14 ein Batteriepack 20 mit einer höheren Spannung aufgenommen werden (vgl. Figur 1a) oder in den beiden daneben liegenden Batterieaufnahmen 12 und 16 Batteriepacks 22 und 24 mit einer niedrigeren Spannung (vgl. Figur 1b) aufgenommen sein.

In der gezeigten Ausführungsform der Figuren 1a und 1b werden die nebeneinanderangeordneten Batterieaufnahmen 12, 14 und 16 seitlich durch Führungsschienen 18a und 18b begrenzt. Wie in den Figuren 1a und 1b gezeigt, können die mittleren Führungsschienen 18b jeweils zwischen zwei Batterieaufnahmen 12, 14 bzw. 14, 16 angeordnet und wahlweise von einem Batteriepack 20 oder den benachbarten Batteriepacks 22 und 24 zur Führung genutzt werden.

In der Figur 1a wird das Batteriepack 20 mit einer ersten Spannung, beispielsweise von 36 Volt, in Richtung E (gekennzeichnet durch den mit dem Bezugszeichen E bezeichneten Pfeil) in die Batterieaufnahme 14 eingeschoben und übergreift zumindest abschnittsweise die seitlichen Führungsschienen 18b, 18b.

In einer denkbaren Ausführungsform können diese Führungsschienen 18b eine Eingriffsnut 18c aufweisen, die seitlich in Richtung zu den jeweils benachbarten Batterieaufnahmen 12 und 16 geöffnet ist. In diesem Fall kann das Batteriepack 20 derart ausgebildet sein, dass es Eingriffselemente (nicht dargestellt) aufweist, die geeignet sind, die Führungsschienen 18c derart zu übergreifen, dass diese in die Eingriffsnut 18c einzugreifen vermögen. Auf diese Weise kann eine mögliche mechanische Kopplung des Batteriepacks 20 in der Aufnahme 14 erreicht werden. Bei dieser Ausgestaltungsvariante sind somit die Führungsschienen 18b und die seitlichen Eingriffsnuten 18c der Führungsschienen 18b durch ein gekoppeltes Batteriepack 20 derart blockiert, dass in den benachbarten Batterieaufnahmen 12 und 16 eine Aufnahme und mechanische Kopplung von Batteriepacks 22 und 24 nicht mehr möglich ist. Im umgekehrten Falle blockiert ein Batteriepack 22 und/oder 24 (vgl. Figur 1b), das in den Batterieaufnahmen 12, 16 aufgenommen ist bzw. sind die eine Aufnahme und mechanische Kopplung eines Batteriepacks 20 in der mittleren Aufnahme 14. Alternativ oder zusätzlich ist es jedoch ebenfalls denkbar, dass die mittleren Führungsschienen 18b, die zwischen zwei Batterieaufnahmen 12, 14 bzw. 14, 16 angeordnet sind, eine zweite seitliche Eingriffsnut 18d (in Figur 1a strichliert angedeutet) aufweisen, in die entsprechende Eingriffselemente des Batteriepacks 20 aufgenommen werden können. In diesem Fall könnte die Aufnahme weiterer Batteriepacks in den Batterieaufnahmen 12 und 16 dadurch von einem gekoppelten Batteriepack 20 in der Batterieaufnahme 14 blockiert werden, dass dieses seitlich in die Aufnahmebereiche der Batterieaufnahmen 12 und 16 bzw. den von den Batteriepacks 22, 24 eingenommenen Bauraum (im Falle einer mechanischen Kopplung, vgl. Figur 1b) hineinragt.

Schließlich ist es alternativ oder zusätzlich auch denkbar, dass Eingriffselemente (nicht dargestellt) der Batteriepacks 22 und 24 derart angeordnet sind, dass sie die Führungsschienen 18b übergreifen und in die seitlich geöffneten Eingriffsnuten 18d einzugreifen vermögen. Bei dieser Ausgestaltungsvariante würde ebenfalls die mechanische Kopplung von weiteren Batteriepacks 22, 24 durch ein in der Batterieaufnahme 14 mechanisch gekoppeltes Batteriepack 20 dadurch blockiert, dass die Führungsschienen 18b bzw. die seitlichen Eingriffsnuten 18d für die Batteriepacks 22, 24 und deren Eingriffselemente nicht mehr zugänglich wären.

In jeder denkbaren Ausgestaltungsvariante wird sichergestellt, dass eine Mischbestückung der Multislot-Schnittstelle mit Batteriepacks unterschiedlicher Spannung unterbunden wird.

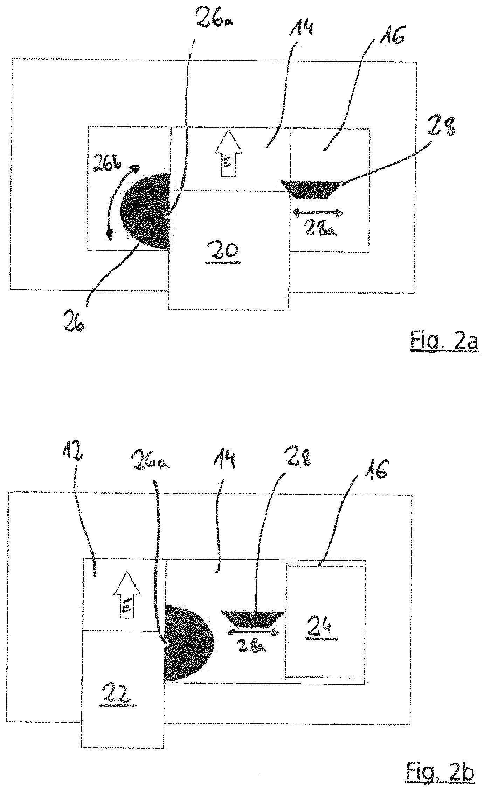

In den Figuren 2a und 2b ist eine erfindungsgemäße Ausgestaltungsvariante einer Multislot-Schnittstelle 10 gezeigt. Bei dieser können, wie in der vorherigen Ausführungsform auch, Führungsschienen zwischen den Batterieaufnahmen 12, 14, 16 vorgesehen sein, sind jedoch nicht unbedingt nötig. Auch überlappen sich bei dieser Ausgestaltungsvariante die Aufnahmebereiche der Batterieaufnahmen 12, 14, 16 bzw. der von den Batteriepacks eingenommene Bauraum im Falle ihrer mechanischen Kopplung mit den Batterieaufnahmen 12, 14 und 16 nicht. Stattdessen sind Blockierelemente 26, 28 vorgesehen, die vorliegend beispielhaft denkbare unterschiedliche Blockierelemente darstellen. Das Blockierelement 26 ist um einen Lagerpunkt 26a drehbar gelagert und kann entsprechend in Richtung 26b rotiert werden. Das Blockierelement 28 kann indes in einer beispielhaften Richtung 28a verschoben werden und ist entsprechend verschiebbar zwischen den Batterieaufnahmen 14 und 16 gelagert. Wird nun ein Batteriepack in eine der Aufnahmen 12, 14 oder 16 eingebracht, beispielsweise in Richtung E eingeschoben, so verdrängt es die hineinragenden Teile des jeweiligen Blockierelements 26 und 28 und führt zu einer entsprechenden Verlagerung, d.h. Rotation um den Lagerpunkt 26a oder Verschiebebewegung 28a in Richtung der benachbarten Batterieaufnahme (in Figur 2a Batterieaufnahme 12 bzw. 16). Das Blockierelement liegt dann jeweils an dem mechanisch gekoppelten Batteriepack an und eine weitere Bewegung, beispielsweise in seine Ausgangsstellung, wird durch diese Anlage formschlüssig verhindert. Zugleich sperrt das Blockierelement zumindest einen Teil der Batterieaufnahme, in die es hineinragt (12 und 16 in Figur 2a) und verhindert somit wirksam das mechanische Koppeln weiterer Batteriepacks in den benachbarten Batterieaufnahmen 12 und 16 (in Figur 2a).

Selbstverständlich sind die dargestellten Ausgestaltungen von Blockierelementen rein exemplarisch und diese können jedwede Form aufweisen. Auch ist die Kombination unterschiedlicher Blockierelemente oder gleichgearteter Blockierelemente ebenso denkbar wie das Vorsehen eines Blockierelements mit einer Führungsschiene. So kann ein Blockierelement entsprechend die Führungsschiene durchragen bzw. an dieser drehbar oder verschiebbar gelagert sein. Entscheidend ist nur, dass ein Blockierelement in der Weise von einem mechanisch gekoppelten Batteriepack verlagert wird, dass es in die benachbarte Batterieaufnahme oder den von einem weiteren (benachbarten) Batteriepack eingenommenen Bauraum derart eingreift, dass eine mechanische Kopplung weiterer Batteriepacks einer anderen Spannung, als der des eingesetzten Batteriepacks, sicher verhindert wird.

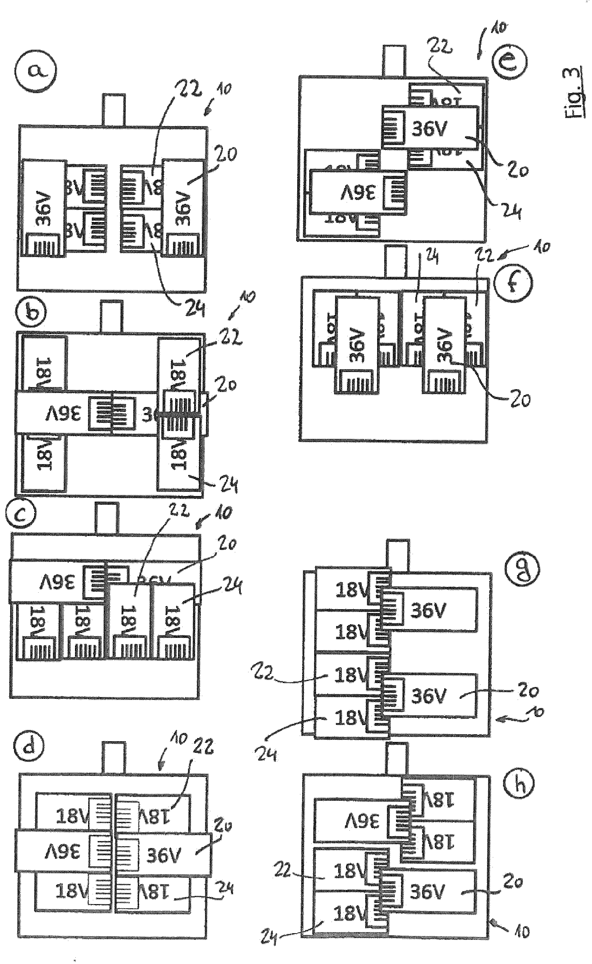

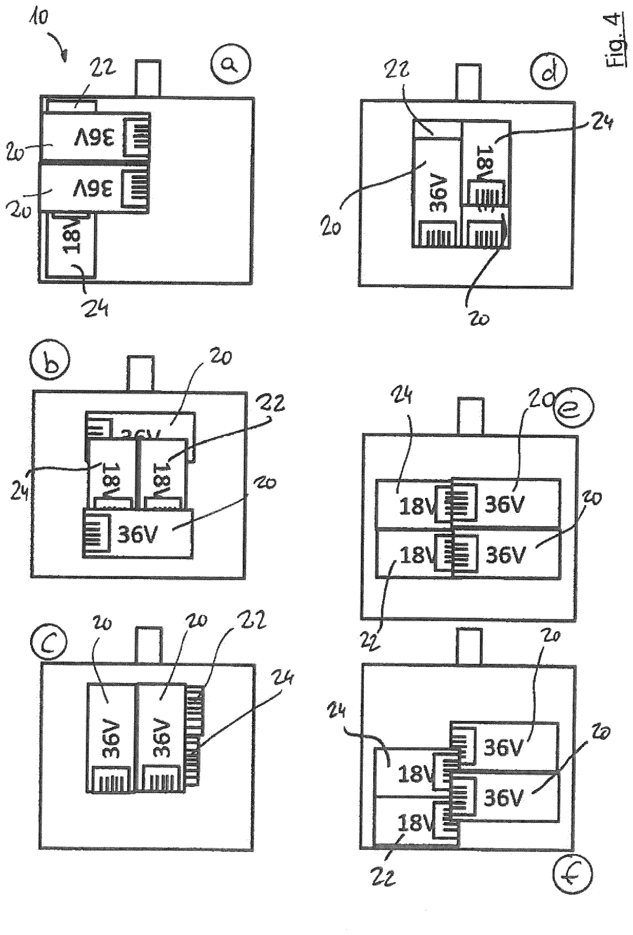

In den Figuren 3 und 4 sind schließlich weitere Anordnungsvarianten (a, b, c, ...) der Batterieaufnahmen 20, 22 und 24 einer Multislot-Schnittstelle 10 gezeigt, die sowohl eine gleichzeitige mechanische Kopplung von Batteriepacks unterschiedlicher Spannungen zu blockieren vermögen als auch gegebenenfalls zusätzlich die elektrische Kontaktierung über die elektrischen Kontakte 20a, 22a und 24a. Dabei sei nur am Rande erwähnt, dass in der Figur 3 zudem immer zwei Multislot-Schnittstellen gezeigt sind, die in Reihe oder parallel geschaltet sein können, während die Figur 4 Anordnungen mit mehr als einer Schnittstelle 20 mit einer höheren Spannung, beispielsweise 36V, zeigt.

## Patentansprüche

1. Multislot-Schnittstelle (10) für ein batteriebetriebenes Elektrogerät oder ein Ackuladegerät zum elektrischen und mechanischen Koppeln von wenigstens einem Batteriepack (20)

   wobei die Multislot-Schnittstelle (10) derart ausgebildet ist, dass wahlweise ein erstes Batteriepack (20) mit einer höheren ersten Spannung, beispielsweise ein Batteriepack mit einer Spannung von 36V, oder wenigstens zwei zweite Batteriepacks (22, 24) mit einer niedrigeren zweiten Spannung, beispielsweise zwei Batteriepacks mit einer Spannung von 18V, über die Multislot-Schnittstelle (10) gekoppelt werden können, um die Antriebseinheit mit elektrischer Spannung zu versorgen oder um von dem Akkuladegerät geladen werden zu können, wobei die Multislot-Schnittstelle (10) wenigstens drei Batterieaufnahmen (12, 14, 16) zur mechanischen Kopplung der Batteriepacks (20, 22, 24) aufweist, die derart angeordnet sind, dass ein gekoppelter Batteriepack einer ersten (20) oder zweiten Spannung (22, 24) das gleichzeitige mechanische Koppeln eines Batteriepacks einer jeweils anderen Spannung blockiert,
   **dadurch gekennzeichnet, dass** zwischen zwei benachbarten Batterieaufnahmen (12, 14, 16) ein Blockierelement (26, 28) vorgesehen ist, das relativ zu den Batterieaufnahmen (12, 14, 16) verschiebbar oder verdrehbar gelagert ist, und je nach Position bzw. Ausrichtung seitlich in zumindest eine der benachbarten Batterieaufnahmen (12, 14, 16) zu ragen vermag.

2. Batteriebetriebenes Elektrogerät umfassend eine elektrische angetriebene Antriebseinheit sowie wenigstens eine Multislot-Schnittstelle (10) nach Anspruch 1.

3. Akkuladegerät umfassend einen Netzanschluss sowie wenigstens eine Mutislot-Schnittstelle (10) nach Anspruch 1.

4. Elektrogerät oder Akkuladegerät nach Anspruch 2 oder 3,
**dadurch gekennzeichnet, dass** die Batterieaufnahmen (12, 14, 16) nebeneinander angeordnet sind und jeweils durch zwei im Wesentlichen parallel angeordnete Führungsschienen (18a, 18b) seitlich begrenzt sind, wobei insbesondere nebeneinanderliegende Batterieaufnahmen (12, 14, 16) optional gemeinsam eine Führungsschiene (18b) als seitliche Begrenzung nutzen können.

5. Elektrogerät oder Akkuladegerät nach einem der vorhergehenden Ansprüche 2 bis 4,
**dadurch gekennzeichnet, dass** eine Führungsschiene (18b), die als seitliche Begrenzung gemeinsam von zwei benachbarten Batterieaufnahmen (12, 14, 16) genutzt wird, eine seitliche Eingriffsnut (18c, 18d) aufweist, in die fallweise ein Eingriffselement eines an die Eingriffsnut (18c, 18d) anliegenden Batteriepacks mit einer ersten (20) oder zweiten Spannung (22, 24) seitlich einzugreifen vermag, oder die von einem Eingriffselement eines benachbarten Batteriepacks mit einer jeweils anderen zweiten (22, 24) oder ersten Spannung (20) übergriffen zu werden vermag.

6. Elektrogerät oder Akkuladegerät nach einem der vorhergehenden Ansprüche 2 bis 5,
**dadurch gekennzeichnet, dass** die Batterieaufnahme (14) für ein erstes Batteriepack (20) und die Batterieaufnahmen (12, 16) für zweite Batteriepacks (22, 24) sich zumindest abschnittsweise überlappen.

7. Elektrogerät oder Akkuladegerät nach einem der vorhergehenden Ansprüche 2 bis 6,
**dadurch gekennzeichnet, dass** ein Batteriepack einer ersten (20) oder zweiten Spannung (22, 24) im gekoppelten Zustand die elektrische Kopplung eines Batteriepacks der jeweils anderen zweiten (22, 24) oder ersten Spannung (20) blockiert.

8. Elektrogerät oder Akkuladegerät nach einem der vorhergehenden Ansprüche 2 bis 7,
**dadurch gekennzeichnet, dass** die zweite Spannung dem Quotienten der ersten Spannung und der Anzahl der zweiten Batteriepacks (22, 24) entspricht.

9. Elektrogerät oder Akkuladegerät nach einem der vorhergehenden Ansprüche 2 bis 8,
**dadurch gekennzeichnet, dass** das Elektrogerät oder Akkuladegerät mehrere Multislot-Schnittstellen (10) aufweist, die in Reihe miteinander oder parallel geschaltet sind.

10. Elektrogerät oder Akkuladegerät nach Anspruch 9,
**dadurch gekennzeichnet, dass** die Multislot-Schnittstellen (10) parallel geschaltet sind, wobei zwischen den Stromkreisen der Schnittstellen wenigstens eine Diode vorgesehen sein kann.

**Claims**

1. Multi-slot interface (10) for a battery-operated electrical device or a battery charger for the electrical and mechanical coupling of at least one battery pack (20),

   wherein the multislot interface (10) is designed in such a way that either a first battery pack (20) with a higher first voltage, for example a battery pack with a voltage of 36V, or at least two second battery packs (22, 24) with a lower second voltage, for example two battery packs with a voltage of 18V, can be coupled via the multislot interface (10), in order to supply the drive unit with electrical voltage or in order to be able to be charged by the battery charger, the multislot interface (10) having at least three battery holders (12, 14, 16) for mechanically coupling the battery packs (20, 22, 24), which are arranged in such a way that a coupled battery pack of a first (20) or second voltage (22, 24) blocks the simultaneous mechanical coupling of a battery pack of a respective other voltage,

7

**characterised in that** a blocking element (26, 28) is provided between two adjacent battery holders (12, 14, 16), which is mounted so as to be displaceable or rotatable relative to the battery holders (12, 14, 16) and, depending on its position or orientation, is capable of projecting laterally into at least one of the adjacent battery holders (12, 14, 16).

2. Battery-powered electrical appliance comprising an electrically driven drive unit and at least one multislot interface (10) according to claim 1.

3. Battery charger comprising a power connection and at least one mutislot interface (10) according to claim 1.

4. Electrical appliance or battery charger according to claim 2 or 3,
   **characterised in that** the battery holders (12, 14, 16) are arranged next to one another and are each laterally delimited by two substantially parallel guide rails (18a, 18b), wherein in particular adjacent battery holders (12, 14, 16) can optionally jointly use a guide rail (18b) as a lateral delimitation.

5. Electrical appliance or battery charger according to any of the preceding claims 2 to 4,
   **characterised in that** a guide rail (18b), which is used as a lateral boundary jointly by two adjacent battery holders (12, 14, 16), has a lateral engagement groove (18c, 18d), into which an engagement element of a battery pack bearing against the engagement groove (18c, 18d) with a first (20) or second voltage (22, 24) can engage laterally, or which can be engaged over by an engagement element of a neighboring battery pack with a respectively different second (22, 24) or first voltage (20).

6. Electrical appliance or battery charger according to any of the preceding claims 2 to 5,
   **characterised in that** the battery holder (14) for a first battery pack (20) and the battery holders (12, 16) for second battery packs (22, 24) overlap at least in sections.

7. Electrical appliance or battery charger according to any of the preceding claims 2 to 6,
   **characterised in that** a battery pack of a first (20) or second voltage (22, 24) blocks the electrical coupling of a battery pack of the respective other second (22, 24) or first voltage (20) in the coupled state.

8. Electrical appliance or battery charger according to any of the preceding claims 2 to 7,
   **characterised in that** the second voltage corresponds to the quotient of the first voltage and the number of second battery packs (22, 24).

9. Electrical appliance or battery charger according to any of the preceding claims 2 to 8,
   **characterised in that** the electrical appliance or battery charger has several multislot interfaces (10) which are connected in series or in parallel.

10. Electrical appliance or battery charger according to claim 9,
    **characterised in that** the multislot interfaces (10) are connected in parallel, whereby at least one diode can be provided between the circuits of the interfaces.

## Revendications

1. Interface multi-slot (10) pour un appareil électrique alimenté par batterie ou un chargeur de batterie pour le couplage électrique et mécanique d'au moins un bloc de batteries (20)

   l'interface multi-slot (10) étant conçue de telle sorte que, au choix, un premier bloc de batteries (20) avec une première tension plus élevée, par exemple un bloc de batteries avec une tension de 36V, ou au moins deux deuxièmes blocs de batteries (22, 24) avec une deuxième tension plus faible, par exemple deux blocs de batteries avec une tension de 18V, peuvent être couplés via l'interface multi-slot (10), pour alimenter l'unité d'entraînement en tension électrique ou pour pouvoir être chargée par le chargeur de batterie,
   l'interface multislot (10) présentant au moins trois logements de batterie (12, 14, 16) pour le couplage mécanique des packs de batterie (20, 22, 24), qui sont disposés de telle sorte qu'un pack de batterie couplé d'une première (20) ou d'une deuxième tension (22, 24) bloque le couplage mécanique simultané d'un pack de batterie d'une autre tension respective,
   **caractérisé en ce qu'**il est prévu, entre deux logements de batterie (12, 14, 16) voisins, un élément de blocage (26, 28) qui est monté de manière à pouvoir être déplacé ou tourné par rapport aux logements de batterie (12, 14, 16) et qui, selon sa position ou son orientation, peut faire saillie latéralement dans au moins l'un des logements de batterie (12, 14, 16) voisins.

2. Appareil électrique alimenté par batterie comprenant une unité d'entrainement entrainée électriquement ainsi qu'au moins une interface multi-slot (10) selon la revendication 1.

3. Chargeur de batterie comprenant une connexion au réseau ainsi qu'au moins une interface mutislot (10) selon la revendication 1.

4. Appareil électrique ou chargeur de batterie selon la revendication 2 ou 3, **caractérisé en ce que** les logements de batterie (12, 14, 16) sont disposés les uns à côté des autres et sont chacun limités latéralement par deux rails de guidage (18a, 18b) disposés sensiblement parallèlement, des logements de batterie (12, 14, 16) situés en particulier les uns à côté des autres pouvant en option utiliser en commun un rail de guidage (18b) comme limitation latérale.

5. Appareil électrique ou chargeur de batterie selon l'une quelconque des revendications précédentes 2 à 4, **caractérisé en ce qu'**un rail de guidage (18b), qui est utilisé comme délimitation latérale en commun par deux logements de batterie (12, 14, 16) voisins, présente une rainure d'engagement (18c, 18d) latérale, dans laquelle, le cas échéant, un élément d'engagement d'une batterie d'un type différent (18c, 18d) avec une première (20) ou une deuxième tension (22, 24), ou qui peut être recouverte par un élément d'engagement d'un bloc de batteries voisin avec une deuxième (22, 24) ou une première tension (20) respectivement différente.

6. Appareil électrique ou chargeur de batterie selon l'une quelconque des revendications précédentes 2 à 5, **caractérisé en ce que** le logement de batterie (14) pour un premier bloc de batterie (20) et les logements de batterie (12, 16) pour des deuxièmes blocs de batterie (22, 24) se chevauchent au moins par sections.

7. Appareil électrique ou chargeur de batterie selon l'une quelconque des revendications précédentes 2 à 6, **caractérisé en ce qu'**un bloc de batteries d'une première (20) ou d'une deuxième (22, 24) tension bloque, dans l'état couplé, le couplage électrique d'un bloc de batteries de l'autre deuxième (22, 24) ou de la première (20) tension.

8. Appareil électrique ou chargeur de batterie selon l'une quelconque des revendications précédentes 2 à 7, **caractérisé en ce que** la deuxième tension correspond au quotient de la première tension et du nombre des deuxièmes blocs de batterie (22, 24).

9. Appareil électrique ou chargeur de batterie selon l'une quelconque des revendications précédentes 2 à 8, **caractérisé en ce que** l'appareil électrique ou le chargeur de batterie comprend plusieurs interfaces multi-slot (10) qui sont connectées en série les unes avec les autres ou en parallèle.

10. Appareil électrique ou chargeur de batterie selon la revendication 9, **caractérisé en ce que** les interfaces multi-slot (10) sont connectées en parallèle, au moins une diode pouvant être prévue entre les circuits électriques des interfaces.

Fig. 1a

Fig. 1b

Fig. 2a

Fig. 2b

Fig. 3

Fig. 4

**IN DER BESCHREIBUNG AUFGEFÜHRTE DOKUMENTE**

**In der Beschreibung aufgeführte Patentdokumente**

- EP 2595273 A2
- DE 202011110568 U1
- US 20130062955 A1
- DE 102016118805 A1
- DE 3110629 A1
- US 5686811 A
- US 20080143294 A1
- WO 2010034079 A1
- WO 2014142112 A1
- US 2008143294 A1